(19) Europäisches Patentamt
European Patent Office
Office européen des brevets

(11) **EP 2 680 387 A1**

(12) **DEMANDE DE BREVET EUROPEEN**

(43) Date de publication:
**01.01.2014 Bulletin 2014/01**

(51) Int Cl.:
*H02J 1/00* [(2006.01)]  *H02J 3/00* [(2006.01)]
*H02J 4/00* [(2006.01)]

(21) Numéro de dépôt: **13171849.6**

(22) Date de dépôt: **13.06.2013**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**

(30) Priorité: **27.06.2012 FR 1256095**

(71) Demandeur: **Nexans**
**75008 Paris (FR)**

(72) Inventeurs:
• **Morice, Stéphane**
**62790 Leforest (FR)**
• **Bacquet, Gérard Marcel**
**78800 Houilles (FR)**

(74) Mandataire: **Lenne, Laurence et al**
**Ipsilon Feray Lenne Conseil**
**Le Centralis**
**63, avenue du Général Leclerc**
**92340 Bourg-la-Reine (FR)**

(54) **Câble de transport électrique destiné à former un réseau électrique de courant continu d'un bâtiment**

(57) L'invention concerne un câble de transport électrique destiné à former un réseau électrique de courant continu d'un bâtiment alimenté en énergie électrique à basse tension au moyen d'un réseau électrique de courant alternatif, la tension dudit réseau électrique de courant continu étant inférieure à la tension efficace dudit réseau électrique de courant alternatif.

Selon l'invention, le câble comporte un conducteur constitué d'au moins un métal et présentant une conductivité supérieure à 60% d'IACS, une section $S$ inférieure ou égale à 1,5 mm$^2$ et une contrainte à la rupture $\sigma$ telles que le produit $S \times \sigma$ est supérieur à 390 Newton.

EP 2 680 387 A1

**Description**

L'invention concerne un câble de transport électrique destiné à former un réseau électrique de courant continu d'un bâtiment.

Il existe aujourd'hui une tendance mondiale pour l'utilisation de courant continu de basse tension, c'est-à-dire de tension inférieure à 1500V, dans les bâtiments résidentiels, commerciaux et tertiaires. Cette tendance est issue de diverses évolutions techniques répondant aux besoins de réduire la consommation énergétique des bâtiments, à savoir entre autres :

- Favoriser l'usage des éclairages à très faible niveau de consom m ation énergétique, par exemple les diodes électroluminescentes ;
- Favoriser l'usage d'équipements digitaux au détriment d'équipements analogiques plus consommateurs d'énergie ;
- Bénéficier de la convergence IP (« Internet Protocole ») et ceci en particulier dans les bâtiments tertiaires et commerciaux ;
- Consommer l'énergie d'origine naturelle produite localement com m e l'électricité issue de panneaux et systèmes solaires ;
- Réduire l'usage de convertisseurs de courant alternatif en courant continu individualisés pour chaque équipement, chaque élément représentant quelques pourcent de pertes électriques ;
- Utiliser directement le courant continu issu des stockages électriques autonomes et individualisés au niveau des bâtiments tels que les batteries chimiques, magnétiques ou cinématiques ou autres systèmes de stockage nomades comme les véhicules électriques se com portant com me tel.

Compte tenu de telles demandes liées à l'usage du courant continu à basse tension dans les bâtiments résidentiels, tertiaires et commerciaux, il s'avère que les quantités de cuivre recuit actuellement utilisées dans les câbles de transport électrique à basse tension deviennent surdimensionnées par rapport aux besoins réels.

Pour résoudre ce problème, l'invention propose un procédé d'alimentation en énergie électrique à basse tension de bâtiments au moyen d'un premier réseau électrique de courant alternatif et d'un deuxième réseau électrique de courant continu d'une tension inférieure assurant l'alimentation en énergie électrique d'appareillages spécifiques.

Grâce à l'invention, il est réalisé une séparation des réseaux électriques à au moins deux niveaux.

Le premier réseau répondra aux besoins élevés d'énergie pour alimenter les éléments tels que les chauffages électriques, les fours, les machines à laver, etc. Pour ces équipements, il est possible de choisir une tension d'environ 380 V. Elle est alternative en raison des risques encourus par le courant continu à ces tensions et ampérages élevés.

Le second réseau concerne l'usage domestique de faible puissance. Il s'agit essentiellement de l'éclairage, de l'alimentation des ordinateurs, des écrans de téléviseurs numériques, des caméras de surveillance, des alarmes et autres systèmes de sécurité, des recharges de téléphones portables ou tout autre équipement numérique nomade. Tous ces éléments sont aujourd'hui alimentés avec une tension alternative convertie en courant continu de faible tension. Il est probable que le futur verra une harmonisation des tensions utilisées par exemple à 24V ou 48 V.

Pour ce faire, l'invention propose un câble de transport électrique destiné à former un réseau électrique de courant continu d'un bâtiment alimenté en énergie électrique à basse tension au moyen d'un réseau électrique de courant alternatif, la tension dudit réseau électrique de courant continu étant inférieure à la tension efficace dudit réseau électrique de courant alternatif, câble **caractérisé en ce qu'il** comporte un conducteur constitué d'au moins un métal et présentant une conductivité supérieure à 60% d'IACS, une section S inférieure ou égale à 1,5 mm$^2$ et une contrainte à la rupture $\sigma$ telles que le produit S x $\sigma$ est supérieur à 390 Newton.

De préférence, la conductivité du conducteur est supérieure à 80% d'IACS.

Le câble peut comporter un seul fil conducteur ou plusieurs fils conducteurs. Par conducteur, il est entendu le fil conducteur ou l'ensemble des fils conducteurs, en général toronnés.

Ce conducteur qui est de préférence de section transversale inférieure à un conducteur classique en cuivre recuit doit présenter une haute tenue mécanique.

Afin de ne pas dégrader les conditions d'installation, la tenue mécanique du conducteur selon l'invention est supérieure à celle d'un conducteur en cuivre recuit d'une section de 1,5mm$^2$.

Le conducteur peut être constitué d'un métal, de préférence du cuivre dur, ou d'un alliage de métaux, de préférence un alliage de cuivre.

Il peut également être constitué de plusieurs métaux ou de plusieurs alliages, par exemple un premier métal, de préférence de l'acier, revêtu d'un second métal, de préférence du cuivre, ou être constitué de plusieurs fils conducteurs de différentes natures.

Dans le cas d'utilisation d'un alliage de cuivre unique, ce dernier présente avantageusement une teneur en cuivre supérieure à 98%.

A titre d'exemples, cet alliage peut être :

- un alliage de cuivre et d'étain dont la teneur en étain peut être de 0,1%, 0,3% ou 0,5% ;
- un alliage de cuivre et d'argent dont la teneur en argent peut être de 0, 1 % ;
- un alliage de cuivre et de magnésium dont la teneur en magnésium peut être de 0,2% ou 0,5% ;
- un alliage de cuivre et de chrome dont la teneur en chrome peut être de 0,7% ;
- un alliage de cuivre et de zirconium dont la teneur en zirconium peut être de 0,15% ;
- un alliage de cuivre et de phosphore dont la teneur en phosphore peut être de 0,03% ou de 0,08% ;
- un alliage de cuivre et de cobalt dont la teneur en cobalt peut être de 0,28%.

La conductivité du conducteur doit également éviter les échauffements pouvant endommager les couches isolantes et limiter la surconsommation énergétique liée à l'effet Joule.

Pour ce faire, de préférence, selon l'invention, le conducteur présente pour le passage d'un courant d'intensité $I_{al}$, un rayon $r_{al}$ et une résistivité $\rho_{al}$ tels que $r_{al} > 0,69^*$ racine cubique ($I_{al}^2/0,25^*\rho_{al}/1,724$).

Il est pris pour hypothèse dans le calcul suivant que la matière isolante est identique à celle d'un câble à conducteur de cuivre recuit classique.

Afin de ne pas avoir de dégradation de l'isolant, selon l'invention, le rapport de la quantité d'énergie produite par effet joule divisée par la surface du conducteur doit être inférieur à celui d'un conducteur en cuivre recuit d'une section normalisée de 1,5 mm$^2$.

Il faut donc que $Q_{Cu}/\text{Surface}_{Cu} > Q_{al}/\text{Surface}_{al}$

Soit

$$R_{cu}^* I_{cu}^2 / \text{Surface}_{Cu} > R_{al}^* I_{al}^2 / \text{surface}_{al}$$

$$I_{cu}^2 * \rho_{cu}^* L / (\Pi r_{cu}^2) / 2\Pi r_{cu}L > I_{al}^2 * \rho_{al}^* L / (\Pi r_{al}^2) / 2\Pi r_{al}L$$

$$\rho_{cu}/r_{cu}^3 /_{cu} > I_{al}^2 / I_{cu}^2 * \rho_{al}/r_{al}^3$$

et donc

$$r_{al} > 0,69^* \text{ racine cubique}(I_{al}^2/0,25^* \rho_{al}/1,724)$$

avec

$R_{cu}$ : résistance linéique du cuivre en Ohm/km
$R_{al}$ : résistance linéique de l'alliage en Ohm/km
$I_{cu}$ : courant circulant dans un conducteur de cuivre recuit de 1,5mm$^2$ soit actuellement 0,5A
$I_{al}$: courant circulant dans un câble en alliage dans le futur soit par exemple 0,25A
$\rho_{cu}$ : résistivité du cuivre recuit en $\mu$Ohm.cm soit 1,724 $\mu$Ohm.cm.
$\rho_{al}$ : résistivité de l'alliage en $\mu$Ohm.cm
$r_{cu}$ : rayon du conducteur cuivre recuit en mm soit
$r_{al}$ : rayon du conducteur alliage en mm
L : longueur du conducteur
* est le signe de multiplication.

**Revendications**

1. Câble de transport électrique destiné à former un réseau électrique de courant continu d'un bâtiment alimenté en énergie électrique à basse tension au moyen d'un réseau électrique de courant alternatif, la tension dudit réseau électrique de courant continu étant inférieure à la tension efficace dudit réseau électrique de courant alternatif, câble **caractérisé en ce qu'il** comporte un conducteur constitué d'au moins un métal et présentant une conductivité supérieure à 60% d'IACS, une section S inférieure ou égale à 1,5 mm$^2$ et une contrainte à la rupture σ telles que le produit S x σ est supérieur à 390 Newton.

2. Câble selon la revendication précédente, **caractérisé en ce que** ledit métal est du cuivre dur.

3. Câble selon la revendication 1 , **caractérisé en ce que** ledit conducteur est constitué d'un alliage de cuivre.

4. Câble selon la revendication précédente, **caractérisé en ce que** ledit alliage de cuivre présente une teneur en cuivre supérieure à 98%.

5. Câble selon la revendication précédente, **caractérisé en ce que** ledit conducteur en alliage de cuivre présente pour le passage d'un courant d'intensité $I_{al}$, un rayon $r_{al}$ et une résistivité $\rho_{al}$ tels que $r_{al} > 0,69 \ast$ racine cubique ($I_{al}^2/0,25 \ast \rho_{al}/1,724$).

6. Câble selon la revendication 1 , **caractérisé en ce que** ledit conducteur est constitué d'acier revêtu de cuivre.

Europäisches
Patentamt

European
Patent Office

Office européen
des brevets

**RAPPORT DE RECHERCHE EUROPEENNE**

Numéro de la demande

EP 13 17 1849

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | US 2012/068533 A1 (PAN YANG [CN]) 22 mars 2012 (2012-03-22) * abrégé * * figures 1,2,8 * * alinéas [0003], [0028], [0015] * ----- | 1-6 | INV. H02J1/00 H02J3/00 H02J4/00 |
| X | US 5 969 435 A (WILHELM WILLIAM GEORGE [US]) 19 octobre 1999 (1999-10-19) * abrégé * * figures 1-5 * * revendication 1 * ----- | 1-6 | |
| A | CN 201 956 701 U (YUNNAN PROVINCIAL ELECTRIC POWER TEST & RES INST GROUP CO LTD) 31 août 2011 (2011-08-31) * abrégé * * figure 1 * ----- | 1-6 | |

| | DOMAINES TECHNIQUES RECHERCHES (IPC) |
|---|---|
| | H02J |

Le présent rapport a été établi pour toutes les revendications

| Lieu de la recherche | Date d'achèvement de la recherche | Examinateur |
|---|---|---|
| Munich | 9 octobre 2013 | Fiat, Cyrille |

CATEGORIE DES DOCUMENTS CITES

X : particulièrement pertinent à lui seul
Y : particulièrement pertinent en combinaison avec un
    autre document de la même catégorie
A : arrière-plan technologique
O : divulgation non-écrite
P : document intercalaire

T : théorie ou principe à la base de l'invention
E : document de brevet antérieur, mais publié à la
    date de dépôt ou après cette date
D : cité dans la demande
L : cité pour d'autres raisons

& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 13 17 1849

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

09-10-2013

| Document brevet cité au rapport de recherche | | Date de publication | Membre(s) de la famille de brevet(s) | Date de publication |
|---|---|---|---|---|
| US 2012068533 | A1 | 22-03-2012 | AUCUN | |
| US 5969435 | A | 19-10-1999 | AUCUN | |
| CN 201956701 | U | 31-08-2011 | AUCUN | |

Pour tout renseignement concernant cette annexe : voir Journal Officiel de l'Office européen des brevets, No.12/82